# EUROPEAN PATENT APPLICATION

(11) **EP 3 173 287 A1**
(43) Date of publication of application: **31.05.2017**
(21) Application number: 15824408.7
(22) Date of filing: 10.07.2015
(51) Int. Cl.: B60R 1/10, B60R 1/04, B60R 1/08

(54) **BLIND SPOT ASSIST DEVICE**

(30) Priority: 24.07.2014 JP 2014150432; 18.12.2014 JP 2014256213
(71) Applicant: Nippon Seiki Co., Ltd., Nagaoka-shi, Niigata 940-8580 (JP)
(72) Inventor: HARUYAMA, Kanae, Nagaoka Niigata (JP); OBATA, Masato, Nagaoka Niigata (JP); HONMA, Azumi, Nagaoka Niigata (JP); MASUDA, Hideki, Nagaoka Niigata (JP)
(74) Representative: Jackson, Richard Eric
(86) International application number: PCT/JP2015/069840
(87) International publication number: WO 2016/013414

(57) **Abstract**

Provided is a blind spot assist device (100) capable of easily adjusting the height of a reflector unit (30) for enabling visual recognition of an image (M) of a region (D) forming a blind spot by being blocked by a pillar (6R) of a vehicle (1).A blind spot assist device (100) is provided with a reflector unit (30) having a pair of mirrors (10) including a semi-transmissive mirror (11). The reflector unit (30) causes an image (M) to be visually recognized inside a vehicle with image(M)-representing light entering between the pair of mirrors (10) that has passed through the semi-transmissive mirror (11). A blind spot assist device (110) is provided with: a slide unit (40) that enables the reflector unit (30) to slide along a direction in which a pillar (6R) extends; and a lock unit (50) that immobilizes the reflector unit (30) with respect to the pillar (6R) in a lock state. The height of the reflector unit (30) can be adjusted by placing the lock unit (50) in the lock state after releasing the lock state of the lock unit (50) and then sliding the reflector unit (30).

## Description

### TECHNICAL FIELD

The present invention relates to a blind spot assist device, and in particular, to a device which causes an occupant to visually recognize an image of a region which is blocked by a pillar of a vehicle and forms a blind spot.

### BACKGROUND ART

As a conventional blind spot assist device, there is the one that is disclosed in Patent Literature 1. The blind spot assist device described in Patent Literature 1 is provided with: a first mirror to visualize a front side of a vehicle; and a second mirror to reflect light incident to the first mirror to a driver side, and is characterized in that a blind spot of a front pillar with respect to the driver is visualized through the first and second mirrors.

### CITATION LIST

### PATENT LITERATURE

Patent Literature 1: Japanese Unexamined Patent Application Publication No. 2006-231998

### SUMMARY OF THE INVENTION

### PROBLEMS TO BE SOLVED BY THE INVENTION

As described above, in a device to cause an occupant to visually recognize an image of a blind spot by a reflector unit which is composed of a pair of mirrors, there is a need to dispose the reflector unit in a region including a height of an eye line of the driver. However, if the reflector unit is fixed at a height which is adjusted to the eye line of one driver, the height of the fixed reflector unit is not adaptive to an eye line of another driver, and there may be a case in which the image of the blind spot cannot be appropriately visually recognized.

The present invention has been made in view of the circumstance described above, and it is an object of the present invention to provide a blind spot assist device which is capable of easily adjusting a height of a reflector unit to cause a driver to visually recognize an image of a region which is blocked by a pillar of a vehicle and constitutes a blind spot.

### MEANS FOR SOLVING THE PROBLEM

To achieve the above object, in a blind spot assist device according to the present invention, the blind spot assist device to visually recognize an image of a region to be a blind spot is blocked by a pillar of a vehicle, the device comprising: a reflector unit having a first mirror to reflect a part of incident light and transmit a remaining part and a second mirror opposing to the first mirror and reflecting light from the first mirror toward the first mirror; a slide unit to make the reflector unit slidable along a direction in which the pillar extends; and a lock unit to immobilize the reflector unit with respect to the pillar in a lock state, wherein the reflector unit causes the occupant to visually recognize the image in the vehicle by the light having transmitted the first mirror, of the light representative of the image incident between the first mirror and the second mirror, and wherein the lock state of the lock unit is released, the reflector unit is slid along the direction, and the lock unit is thereafter established in the lock state, and a position in the direction of the reflector unit is thereby adjustable.

### EFFECT OF THE INVENTION

According to the present invention, it is possible to easily adjust a height of a reflector unit to cause a driver to visually recognize an image of a region to be a blind spot which is blocked by a pillar of a vehicle.

### BRIEF DESCRIPTION OF THE DRAWINGS

[Fig. 1] Fig. 1 is a view showing an overview of the vicinity of a driver seat of a vehicle in which a blind spot assist device according to a first embodiment of the present invention is disposed.
[Fig. 2] Fig. 2 is a schematic plan view for explaining functions of the blind spot device according to the first embodiment.
[Fig. 3] Fig. 3 is a schematic plan view for explaining functions of the blind spot device according to the first embodiment.
[Fig. 4] Fig. 4 is a perspective view of the blind spot device according to the first embodiment.
[Fig. 5] Fig. 5 is a plan view of essential parts of the blind spot device according to the first embodiment.
[Fig. 6] Fig. 6 is a sectional view of the essential parts of the blind spot device according to the first embodiment.
[Fig. 7] Fig. 7 is a view showing a lock unit according to the first embodiment, wherein Fig. 7 (a) is a perspective view of an engagingly locking unit, and Fig. 7 (b) is a plan view of an engaging unit.
[Fig. 8] Fig. 8 is a view showing a blind spot assist device according to a modification example of the first embodiment, wherein Fig. 8 (a) is a perspective view thereof and Fig. 8 (b) is a schematic cross section thereof.
[Fig. 9] Fig. 9 is a perspective view of essential parts of a blind spot assist device according to a second embodiment of the present invention.
[Fig. 10] Fig. 10 is a perspective view of essential parts in a lock state of a blind spot assist device according to a third embodiment of the present invention.
[Fig. 11] Fig. 11 is a perspective view of the essential parts in an unlock state of the deal spot assist device according to the third embodiment of the present invention.
[Fig. 12] Fig. 12 (a) is a view showing a preferred shape example of a comb of the engaging unit; Fig. 12 (b) is a view for explaining a biasing direction of an elastic member according to the third embodiment; and Fig. 12 (c) is a view for explaining a biasing direction of an elastic member according to a modification example of the third embodiment.

### MODE FOR CARRYING OUT THE INVENTION

A blind spot assist device according to an embodiment of the present invention will be described with reference to the drawings.

### (First Embodiment)

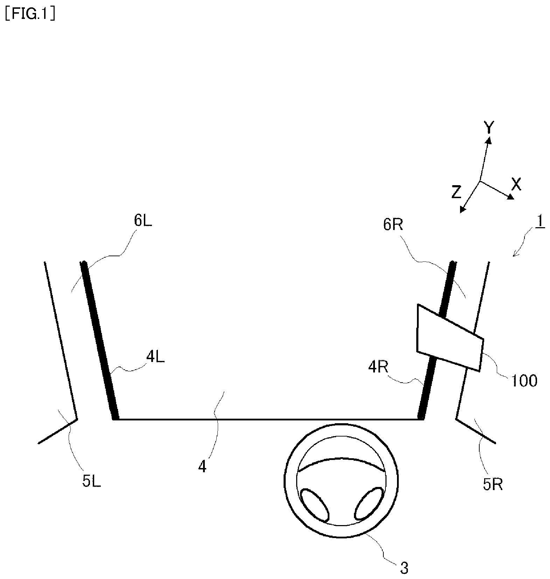

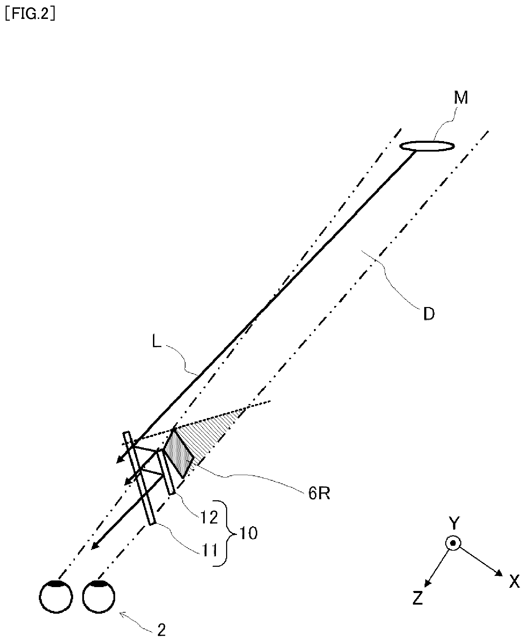

A blind spot assist device 100 according to a first embodiment of the present invention, as shown in Fig. 1, is installed in a vehicle 1. In the vehicle 1, a user 2 (mainly, a driver who sits down on a driver seat at which a steering 3 has been disposed) visually recognizes a landscape outside of the vehicle 1 over a front glass 4 and side glasses 5R, 5L. On the other hand, the user 2 cannot visually recognize an image of a region (a blind spot region D. Refer to Fig. 2.) which is blocked by pillars (front pillars 6R,6L) and constitutes a blind spot. The blind spot assist device 100 according to the present embodiment thus enables the user to visually recognize the image of the blind spot, and is installed at a right side pillar 6R of the front pillars.

It is to be noted that, at end parts of the front glass 4, light shading units 4R, 4L are formed by way of printing or the like. Although a slight blind spot is produced by the light shading unit 4R that is proximal to the right side pillar 6R, according to the blind spot assist device 100, it becomes possible to visually recognize an image of the thus produced blind spot as well. However, in the following description, in order to ensure a clear understanding of explanation, it is presupposed that the blind spot produced by the light shading unit 4R is included in the blind spot produced by the pillar 6R, and the blind spot produced by the pillar 6R will be mainly described.

In addition, the pillar 6R at which the blind spot assist device 100 is to be installed is approximately in a plate shape (a substantially rectangular cylinder shape or a substantial parallelepiped shape). Thus, in order to ensure a clear understanding of functions of each member, hereinafter, a description will be given by appropriately employing the XYZ plane on which the axis along a direction in which the pillar 6R extends is defined as the Y-axis; the axis along a normal line direction of a face oriented into the vehicle 1 of the pillar 6R (a face approximately oriented to the user 2) is defined as the Z-axis; and the axis orthogonal to the Z-axis and the Y-axis is defined as the X-axis (refer to Fig. 1 and Fig. 2 or the like).

In addition, the direction indicated by the arrow representative of each of the X. Y, and X axes is defined as a positive direction of each axis. In this case, as is obvious from Fig. 1 and Fig. 2, the +Y-axis indicates the direction approximately oriented to the top from a bottom side of the vehicle 1; the +Z-axis indicates the direction that is approximately oriented to the user 2 from the pillar 6R; and the +X direction indicates the direction that is approximately oriented to a rear side of the vehicle 1 from the pillar 6R. It is to be noted that this XYZ plane is not completely precise, and is merely introduced to ensure a clear understanding of construction such as a positional relationship of the respective members.

The blind spot assist device 100, as shown in Fig. 2 to Fig. 7, is provided with a reflector unit 30, a slide unit 40, and a lock unit 50.

### (Reflector Unit 30)

The reflector unit 30 causes the user 2 to visually recognize, by way of reflection, an image of an object M in a blind spot region D (refer to Fig. 2) exerted by the pillar 6R. The reflector unit 30 has a pair of mirrors 10 and a casing 20 to hold these mirrors 10.

The pair of mirrors 10 oppose to each other, and are composed of a first mirror 11 and a second mirror 12 which are disposed in parallel to each other. As shown in Fig. 2, an end of the first mirror 11 in an approximate -X direction fowlers more significantly than an end of the second mirror 12, and light representative of the object M is first incident to the first mirror 11 and then repeats reflection, and advances in the approximate +X direction between the pair of mirrors 10.

The mirror 11 is a semi-transmissive plane mirror to reflect a part of the incident light and then transmit the remaining part. The first mirror 11 is disposed at the user 2 side more significantly than the second mirror 12. The first mirror 11 forms a reflectivity adjustment layer by vapor-depositing a metal such as aluminum on a surface of a transmissive substrate made of a resin such as polyethylene terephthalate, polycarbonate, polyethylene, or acryl. The reflectivity adjustment layer is formed while the thickness and material are adjusted so that the reflectivity and transmissivity with respect to the incident light respectively have their desired values. In the embodiment, a light quantity ratio of the transmission light and reflection light in the first mirror 11 is set to 1:9 in transmission light to reflection light. It is to be noted that the first mirror 11 may be formed by coating an electrolytic multilayered layer on a surface of the transmissive substrate.

The second mirror 12, for example, is a planar aluminum vapor-deposition mirror which is obtained by vapor-depositing a metal such as aluminum to form a reflection layer on a surface of a transmissive substrate which is similar to the one described above. The second mirror 12 is disposed so that a plane thereof (the face on which the reflection layer has been formed) is parallel to a plane of the first mirror 11 (the face on which the reflectivity adjustment layer has been formed). The second mirror 12 reflects the incident light to the first mirror 11.

It is to be noted that there is no need to dispose the first mirror 11 and the second mirror 12 so as to be completely parallel to each other as long as these mirrors oppose to each other. Also, the transmissive member is sandwiched between the first mirror 11 and the second mirror 12, and a pair of mirrors 10 may be thereby composed of a solid structure.

In addition, the reflectivity adjustment layer (the semi-transmissive reflection layer) is formed on one face of the transmissive member in which a pair of opposite planes to each other have been provided; and a reflection layer is formed on the other face, thereby making it possible to constitute the pair of mirrors 10 as well. Namely, the first mirror 11 and the second mirror 12 do not need to be independent of each other.

The casing 20 is made of a predetermined resin, and holds the first mirror 11 and the second mirror 12 in a state in which the functions described above can be realized. Specifically, the casing 20 forms a substantially boxy shape, and is formed to have: a first aperture 21 opening towards the blind spot region D; a second aperture 22 opposing to the first aperture 21 in the approximate X-direction; and a third aperture 23 opening to the user 2 side (towards in the approximate +Z-direction). The first mirror 11 is mounted to the casing 20 so as to close the third aperture 23. Also, inside of the casing 20 that closes the first aperture 21 and the second aperture 22, the second mirror 12 opposing to the first mirror 11 in the approximate Z-direction is arranged. In addition, in the second aperture 22, a member to prevent entry of dust or the like into the casing 20 (not shown. for example, a transmissive plate material) is provided. The light representative of the object M that exists in the blind spot region D passes through the first aperture 21 of the casing 20, is incident to the pair of mirrors 10, and repeats reflection therebetween.

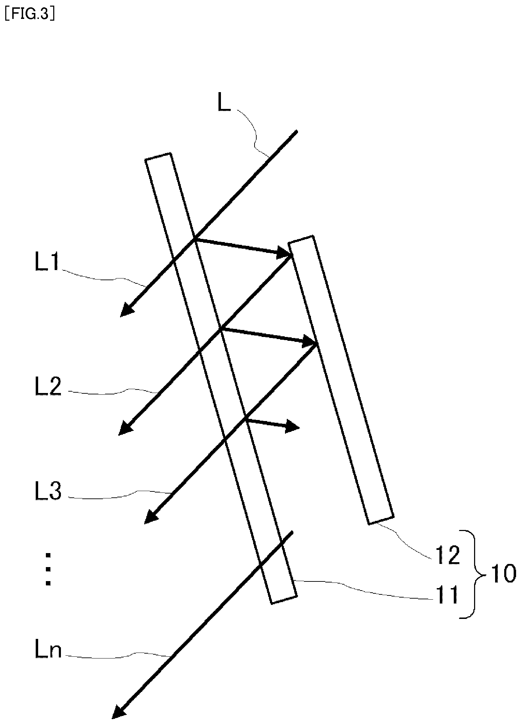

Here, action of the reflector unit 30 will be described with reference to Fig. 2 and Fig. 3. It is to be noted that Fig. 2 shows a state in which the user 2 sits down on the driver seat of the vehicle 1.

As shown in Fig. 2, in a front field of view of the user 2, the blind spot region D that is blocked by the front pillar 6R (and the light shading unit 4R (not shown)) is produced. Therefore, the user 2 cannot directly visually recognize the object M that exists in the blind spot region D. However, in the embodiment, as described hereinafter, it is possible to cause the user 2 to indirectly visually recognize the object M by the reflector unit 30.

As shown in Fig. 2, light L representative of the object M is incident to the pair of mirrors 10, partial light of which transmits the first mirror 11 (emitted from the pair of mirrors 10) and reaches eyes of the user 2 while repeating reflection thereof. In this manner, the user 2 can visually recognize the image of the object M that is visualized in the second mirror 12 over the first mirror 11 while the object is continuous to a landscape which can be directly visually recognized (the landscape that can be seen over the front glass 4 or the side glass 5R).

Incidentally, of the blind spot region F, a slight region on the rear face side of the front pillar 6R (the portion indicated by hatching in Fig. 2) cannot be incident to the pair of mirrors 10, and such a region remains as a blind spot; and however, the other object that is positioned in the blind spot region D can be visually recognized by the pair of mirrors 10.

Here, action of the reflector unit 30 will be more specifically described with reference to Fig. 3.

As described previously, the light quantity ratio of the transmission light to the reflection light in the first mirror 11 is set to 1:9 in reflection light to transmission light. Therefore, as shown in Fig. 3, in a case where the light L has been first incident to the first mirror 11, the light that is the first emitted light from the pair of mirrors 10 (the light that has first transmitted the first mirror 11) L1 becomes 1/10 of the light that has been first incident to the first mirror 11 in light quantity thereof. The light L1 is merely different from the light L in light quantity and thus is representative of the image of the object L similar to the light L. Also, the light L that has been first incident to the first mirror 11 is reflected in sequential order of the first mirror 11 and the second mirror 12 and then is incident to the first mirror 11 again (second time). In a case where the light L has been incident to the first mirror 11 the second time, like the first case, light L2 indicative of the image of the object M from the pair of mirrors 10 is emitted. Further, the light that has been incident to the first mirror 11 the second time is reflected in sequential order of the first mirror 11 and the second mirror 12 and then is incident to the first mirror 11 once again (third time). In a case where the light L has been incident to the mirror 11 the third time, as is the case leading up to the second time, light L3 indicative of the image of the object M from the pair of mirrors 10 is emitted.

The light L thus repeats reflection between the pair of mirrors 10; and therefore, in a case where the light L has been incident to the first mirror 11 n-times, the light L1 to Ln indicative of the image of the object M is emitted from the pair of mirrors 11. That is, from the pair of mirrors 10, images indicative of n objects M are emitted along the transverse direction of the eyes of the user 2. Therefore, the user 2 can visually recognize the image of the object M in a wide range of the transverse direction.

It is to be noted that the light quantity ratio between the transmission light and the reflection light in the first mirror 11 may be appropriately determined in view of lowering of the luminance of the light L exerted by an increased number of reflections and the luminance at the beginning of the incidence of the light L, and the light quantity ratio between the transmission light and the reflection light is not limited to 1:9.

By such an action, in order to appropriately visually recognize the image of the blind spot region D by the reflector unit 30, there is a need to dispose the reflector unit 30 at a height according to a viewpoint of the user 2. In the embodiment, adjustment of this height is easily made possible by a slide unit 40 and a lock unit 50 which will be described later.

### (Slide unit 40)

The slide unit 40 has: a slide plate 41 which is mounted on a rear face side of the casing 20; and a guiderail 42 which is mounted on the pillar 6R side. Each of the slide plate 41 and the guiderail 42 is made of a metal material, for example.

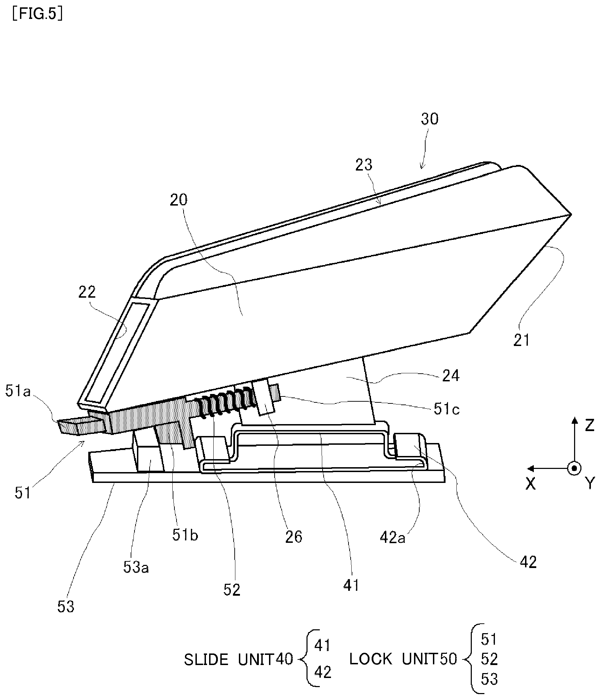

Specifically, the slide plate 41, as shown in Fig. 5, is mounted to a coupling member 24 which protrudes to the rear face side of the casing 20. The coupling member 24 may be integral with, or alternatively, may be independent of, the casing 20. In this manner, the slide plate 41 is fixed to the reflector unit 30.

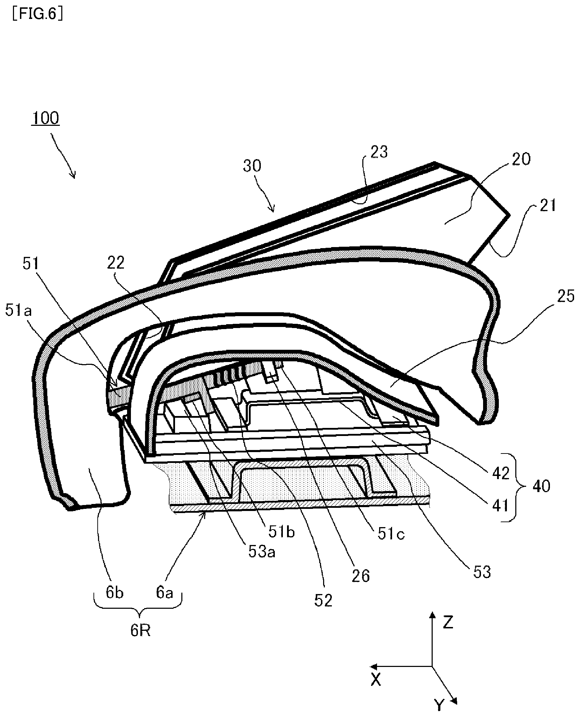

The guiderail 42 is immobilized with respect to a pillar main body 6a which constitutes the pillar 6R (refer to Fig. 6). Specifically, the guiderail 42 is mounted to an engaging unit 53, which will be described later, having been fixed to the pillar main body 6a, and is thereby immobilized with respect to the pillar main body 6a.

The pillar 6R, as shown in Fig. 6, is a part of a frame of the vehicle 1, and has a pillar main body 6a which is formed of a steel or the like; and a pillar cover (a pillar garnish) 6b to cover a vehicular room side of the pillar main body 6a. The guiderail 42 has a guide groove 42a extending along the direction (the Y-direction) in which the pillar 6R extends, and is provided so that a slide plate 41 is engaged with the guide groove 42a.

The slide plate 41 is slidable inside of the guide groove 42a, and the reflector unit 30 is thereby slidable along the guiderail 42.

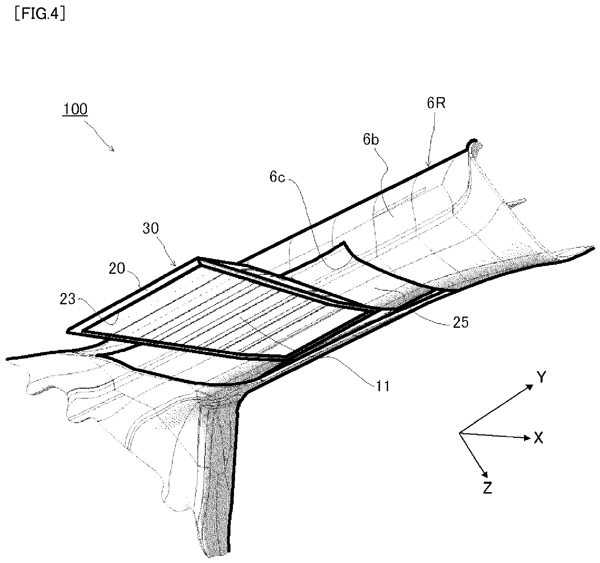

As shown in Fig. 4, in the pillar cover 6b, an aperture 6c is formed so as not to prevent sliding of the reflector unit 30. Although the aperture 6c is formed over the range in which the reflector unit 30 is slidable, if no appropriate countermeasures are taken, the pillar main body 6a is exposed to the eyes of the user 2, and the appearance is not so good. Therefore, in the blind spot assist device 100 according to the embodiment, a cover member 25 which is immobilized with respect to the reflector unit 30 and is positioned between the pillar cover 6b and the pillar main body 6a is provided.

The cover member 25 is fixed to a part of the casing 20 of the reflector unit 30, for example, and is slidable together with the reflector unit 30. The cover member 25 is formed to be larger in size than the aperture 6c of the pillar cover 6b, and in particular, is formed to be sufficiently larger than a width in the Y-direction of the aperture 6c so that a part thereof overlaps the pillar cover 6b. In this manner, even if the reflector unit 30 is slid for the sake of height adjustment, it is possible to prevent exposure of the pillar main body 6c leading to impairment of the appearance of inside of the vehicle 1. In addition, the cover member 25 is surface-finished with a material similar to that for the pillar cover 6b, and is formed in a similar color. In this manner, the impairment of the appearance of the inside of the vehicle 1 can be prevented. Incidentally, from the viewpoint of the appearance, it is preferable to form the casing 20 of the reflector unit 30 with a similar color tone thereto.

### (Lock Unit 50)

The lock unit 50 has: an engagingly locking unit 51 to engagingly lock the reflector unit 30 with the pillar 6R (the pillar main body 6a); an elastic member 52; and an engaging unit 53 to engage with the engagingly locking unit 51.

The engagingly locking unit 51 is formed of a resin or the like, and as shown in Fig. 5 to Fig. 7(a), has an operating unit 51a which is a portion operated to be pressed by the user 2; a comb unit 51b which protrudes in the +X-direction; and a shaft unit 51c which protrudes from a rear face of the comb unit 51b toward the -X direction.

The operating unit 51a, although not shown, is exposed to the outside from the aperture 6c of the pillar cover 6b (protrudes toward the +X-direction), and can be operated to be pressed by fingers or the like of the user 2.

In a state in which the operating unit 51a is not operated, the engagingly locking unit 51 is kept to engage with the engaging unit 53 by a resilient force of the elastic member 52 which will be described later. This state is a lock state in which the reflector unit 30 cannot be slid along the pillar 6R (height adjustment of the reflector unit 30 cannot be made).

On the other hand, in a state in which the user 2 presses the operating unit 51a in the -X-direction, the engagingly locking unit 51 moves in a direction opposing to the resilient force of the elastic member 52. In this manner, an unlock state in which the engagingly locked situation by the engagingly locking unit 51 has been released is established. During the unlock state, it becomes possible to slide the reflector unit 30 along the pillar 6R. A detailed description will be given later.

A tip end of the shaft unit 51c, as shown in Fig. 5 and Fig. 6, is supported by a bearing unit 26 which is formed on a rear face side of the casing 30 of the reflector unit 30. This bearing unit 26 supports the shaft unit 51c to be slidable in the approximate X-direction.

The elastic member 52 is a coil spring made of a metal, for example, and is provided at the shaft unit 51c (as shown in Fig. 5 or the like, the shaft nit 51c is inserted into the elastic member 52 made of the coil spring). Also, the elastic member 52 is positioned between the bearing unit 51c that is provided in the casing 20 and a rear face of the comb unit 51b. In this manner, the elastic member 52 biases the engagingly locking unit 51 toward the +X-direction owing to the resilient force.

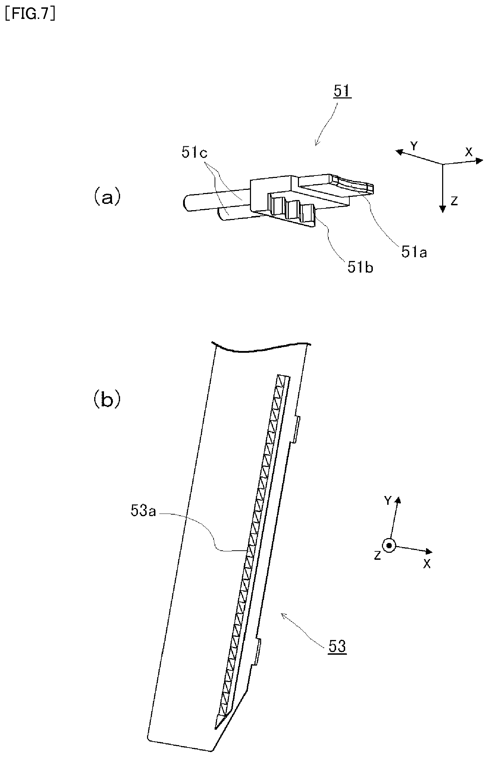

The engaging unit 53 is formed of a resin or the like, and as shown in Fig. 7, is a plate-shaped member along the pillar 6R (along the Y-direction). The engaging unit 53, as shown in Fig. 6, is fixed to a face facing in the +Z-direction of the pillar main body 6a. The engaging unit 53 protrudes in the -X-direction, and is formed to have the comb unit 53a that is arranged in the Y-direction. This comb unit 53a is intended to mesh with the comb unit 51b of the engagingly locking unit 51 that is biased in the +X-direction by the elastic member 52.

Hereinafter, a description will be given with respect to how the height of the reflector unit 30 is adjusted in the blind spot assist device 100 made of the above constituent elements.

In the lock state of the lock unit 50, owing to the biasing force in the +X-direction of the elastic member 52, the comb unit 51b of the engagingly locking unit 51 meshes with the comb unit 53a of the engaging unit 53 that is immobilized with respect to the pillar 6R, whereby the engagingly locking unit 51 engages with the engaging unit 53, and the reflector unit 30 is positioned at a certain height.

If the user 2 presses the operating unit 51a toward the pillar 6R (against the resilient force of the elastic member 52), the engagingly locking unit 51 moves in the -X-direction, and the comb unit 51b of the engagingly locking unit 51 is released from the comb unit 53a of the engaging unit 53. In this manner, the unlock state in which the engagingly locked situation by the engagingly locking unit 51 has been released is established.

The user 2 slides the reflector unit 30 along the Y-direction and then positions the reflector unit at a desired height while the operating unit 51a is thus pressed (while the unlock state is kept as it is). As described previously, the slide plate 41 is slidable inside of the guide groove 42a, and the reflector unit 30 is thereby slidable along the guiderail 42.

After the reflector unit 30 has been positioned at the desired height, if the user 2 stops the pressing operation by releasing the fingers or the like from the operating unit 51a, the engagingly locking unit 51 moves in the +X-direction and then reverts to a position before the pressing operation (the position in the substantial X-direction) owing to the resilient force of the elastic member 52. In this manner, the lock unit 50 gets into the lock state in which the engagingly locking unit 51 and the engaging unit 53 engage with each other, and the reflector unit 30 is engagingly locked with the pillar 6R (the pillar main body 6a).

By means of the operation described hereinabove, the reflector unit 30 is adjusted to the desired height and then is fixed at that height. Thus, with the blind spot assist device 100 according to the first embodiment, merely by pressing and operating the operating unit 51a and then sliding the reflector unit 30, the height of the reflector unit 30 can be adjusted and thus adjustment is easy. This advantageous effect is achieved by the blind spot assist device 100 having the following construction.

The blind spot assist device 100 described hereinabove causes the user to visually recognize the image of the blind spot region D that is blocked by the pillar 6R of the vehicle 1 (the image of the object M). The blind spot assist device 100 is provided with: a reflector unit 30 having a first mirror 11 to reflect a part of the incident light and then transmit the remaining part; a second mirror 12 opposing to the first mirror 11 and reflecting the light from the first mirror 11 toward the first mirror 11; a slide unit 40 to make the reflector unit 30 slidable along the direction in which the pillar 6R extends; and a lock unit 50 to immobilize the reflector unit 30 with respect to the pillar 6R in the lock state.

The reflector unit 30 causes the image to be visually recognized in the vehicle 1 by means of the light having thus transmitted the first mirror 11, of the light representative of the image that is incident between the first mirror 1 and the second mirror 12.

The lock state of the lock unit 50 is released, and the reflector unit 30 is slid along the direction (the Y-direction) and subsequently the lock unit 50 is established in the lock state, and the position in the direction of the reflector unit 30 is thereby made adjustable.

In addition, the lock unit 50 has: an engagingly locking unit 51 (an example of the first member) and an engaging unit 53 (an example of the second member) engaging with each other; an elastic member 52 to bias the engagingly locking unit 51 toward the engaging unit 53; and an operating unit 51a to space, if a releasing operation to release the lock state is made, the engagingly locking unit 51 and the engaging unit 53 along the direction in which the biasing force of the elastic member 52 acts.

If the release operation is made with respect to the operating unit 51a, the state in which the reflector unit 30 is engagingly locked with the pillar 6R is released, and it becomes possible to slide the reflector unit 30 along the direction. If the releasing operation with respect to the operating unit 51a is stopped, the lock state in which the reflector unit 30 is engagingly locked with the pillar 6R owing to the biasing force of the elastic member 52 is established.

Further, the reflector unit 30 has the casing 20. The engagingly locking unit 51 is provided in the casing 20, and moves together with the operating unit 51a if the operating unit 51a is operated to be pressed. The engaging unit 53 is immobilized with respect to the pillar 6R. The elastic member 52 biases the engagingly locking unit 51 toward the engaging unit 53 and then presses the operating unit 51a in the direction opposing to the biasing force of the elastic member 52, and the releasing operation for the engagingly locking unit 51 to be spaced from the engaging unit 53 is thereby made.

Furthermore, the pillar 6R has: a pillar main body 6a; and a pillar cover 6b to cover the pillar main body 6a, and in the pillar cover 6b, an aperture 6c is provided over the range in which the reflector unit 30 is slidable. The blind spot assist device 100 is immobilized with respect to the reflector unit 30, and is further provided with a cover member 25 to slide together with sliding of the reflector unit 30, the cover member 25 is positioned between the pillar cover 6b and the pillar main body 6a and closes the aperture 6c, and even if the reflector unit 30 is slid, the pillar main body 6a is not exposed from the aperture 6c.

In this manner, even if the reflector unit 30 is slid for the sake of height adjustment, it is possible to prevent exposure of the pillar main body 6a and impairment of the appearance of the inside of the vehicle 1. Also, in order to further improve the appearance, it is preferable that the cover member 25 be surface-finished with a similar material to that for the pillar cover 6b, and be formed in a similar color thereto.

Incidentally, although the foregoing description showed an example in which the reflector unit 30 slides inside of the aperture 6c that is provided in the pillar cover 6b, and height adjustment is possible, the present invention is not limited thereto.

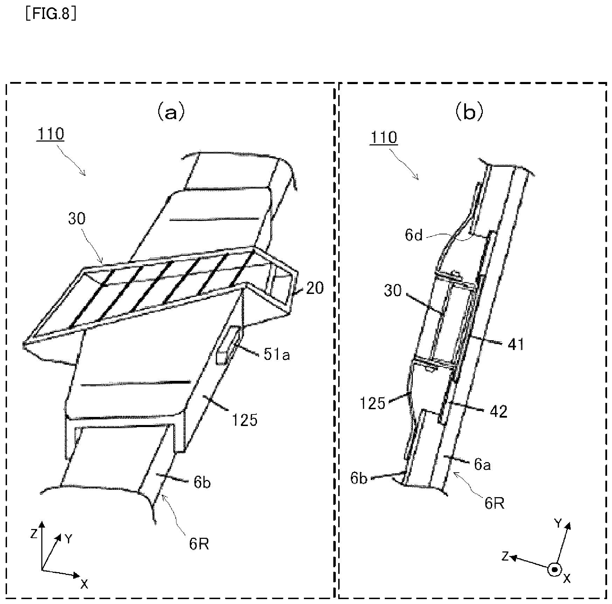

Like the blind spot assist device 110 according to a modification example shown in Fig. 8 (a) and Fig. 8 (b), the reflector unit 30 can also be constructed to be slidable on the pillar cover 6b (in the +Z-direction more significantly than the pillar cover 6b). It is to be noted that in Fig. 8 (a) and Fig. 8 (b), in order to ensure a clear understanding of explanation, same constituent members having similar functions to those of the embodiment were designated by same reference numerals as those of the embodiment. In the blind spot assist device 110, a cover member 125 which has been formed to be integral with the casing 20 of the reflector unit 30 is formed so as to cover the pillar cover 6b. In addition, of the pillar cover 6b, an aperture 6d (refer to Fig. 8 (b)) is provided in a part of the region covered with the covering member 125. Via this aperture 6d, the reflector unit 30 is configured to be slidable with respect to the pillar main body 6a by a slide unit similar to that mentioned previously (the slide plate 41 and the guiderail 42). Incidentally, an operation of height adjustment of the reflector unit 30 is easy, since the operation is similar to that described previously.

Although the foregoing description showed a variety of specific examples, it is possible to appropriately change the protrusion direction of the operating unit 51a, the shape of the elastic member 52 or the direction of the resilient force, and the shape of the slide unit 40 or the like. For example, the elastic member 52 may be a resin spring without being limited to the metal spring. Also, the elastic member 52 may be a torsion spring, a plate spring or the like.

Although the foregoing description showed an example in which the lock unit 50 is kept in the unlock state when the operating unit 51a is continuously operated to be pressed, the present invention is not limited thereto. The blind spot assist device 100 (hereinafter, like the blind spot assist device 100 according to a modification example) may be configured so that a mechanism to keep the unlock state if the user 2 presses the operating unit 51a once is further provided, and the lock state is established if the operating unit 51a is pressed again after height adjustment has been made by sliding the reflector unit 30.

Although the foregoing description showed an example in which the elastic member 52 presses the engagingly locking unit 51 that is provided at the reflector unit 30 side, against the engaging unit 53 that is provided at the pillar 6R side, the present invention is not limited thereto. It is also possible to configure the blind spot assist device 100 so that the elastic member 52 presses the engaging unit 53 against the engagingly locking unit 51.

Hereinafter, a description will be given with respect to blind spot assist devices 200, 300 according to second and third embodiments, which are different from that of the first embodiment in the direction of engagement between the engagingly locking unit and the engaging unit. Hereinafter, a description will be given focusing on differences from the first embodiment. It is to be noted that same constituent elements having the similar functions to those of the first embodiment are designated by same reference numerals as those of the first embodiment, and a duplicate description is omitted.

### (Second Embodiment)

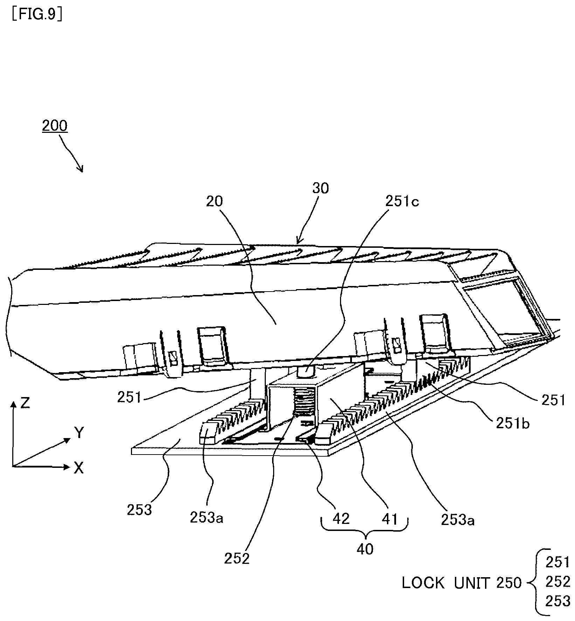

Fig. 9 shows a perspective view of essential parts of a blind spot assist device 200 according to a second embodiment. As shown in the figure, a slide plate 41 and a guiderail 42 which constitute a slide unit 40 are similar to those of the first embodiment.

On the other hand, a locking unit 250 according to the second embodiment has: an engagingly locking unit 251 to engagingly lock a reflector unit 30 with a pillar 6R; an elastic member 252; and an engaging unit 253 to engage with the engagingly locking unit 251 to oppose to each other in the Z-axis direction.

The engagingly locking unit 251, as shown in Fig. 9, has: a comb unit 251b which protrudes in the -Z-direction; and a shaft unit 251c which protrudes in the -Z-direction. It is to be noted that the engagingly locking unit 251 may be directly or indirectly fixed to a casing 20 of the reflector unit 30.

The comb unit 251b is formed to extend along the Y-direction. In the second embodiment, there are two comb units 251b which are respectively disposed at intervals in the X-direction. The shaft unit 251c is positioned between the two comb units 251b, and is provided to penetrate a slide plate 41.

In the second embodiment, as described later, the reflector unit 30 (the casing 20) per se functions as an operating unit operated to be pressed by the user 2 (in the second embodiment, an operation of lifting the reflector unit 30 in the +Z direction).

In a state in which the reflector unit 30 is not operated to be lifted, the engagingly locking unit 251 is kept to engage with the engaging unit 253 by a resilient force of the elastic member 252 which will be described later. This state is a lock state in which the reflector unit 30 cannot be slid along the pillar 6R.

On the other hand, in a state in which the user 2 lifts the reflector unit 30 in the +Z-direction (a releasing operation state in the second embodiment), the engagingly locking unit 251 moves in a direction opposing to the resilient force of the elastic member 252. In this manner, an unlock state in which the engagingly locked situation by the engagingly locking unit 251 has been released is established.

The shaft unit 251c penetrates the slide plate 41 in the -Z-direction, and moves in the Z-axis direction concurrently with movement in the Z-direction of the reflector unit 30. Therefore, if the reflector unit 30 is operated to be lifted in the +Z-direction, the shaft unit 251c also moves in the +Z-direction.

A tip end of the shaft unit 251c is positioned between the slide plate 41 and the guiderail 42. The elastic member 252 is provided so as to couple the tip end of the shaft unit 251c and a back face of the slide plate 41 (the face oriented to the -Z side) to each other.

The elastic member 252 is a coil sprint, for example, and biases the engagingly locking unit 251 toward the -Z-direction owing to the resilient force.

The engaging unit 253, like the first embodiment, is a plate-shaped member fixed to the pillar main body 6a. However, the engaging unit 253, as shown in Fig. 9, protrudes in the +Z-direction, and is formed to have a comb unit 253a extending along the Y-direction. Two comb units 253a each are formed so as to oppose in the Z-axis direction of each of two comb units 251b of the engagingly locking unit 251. The thus formed comb unit 253a is adapted to mesh with the comb 251b of the engagingly locking unit 251b that has been biased in the -Z-direction by the elastic member 252.

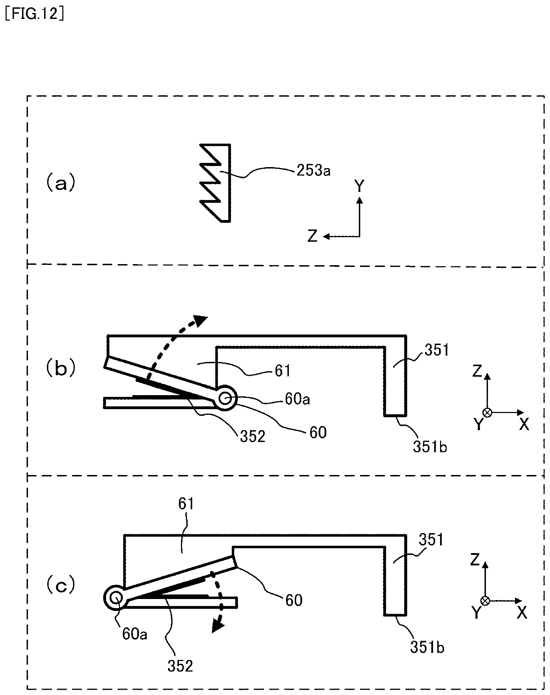

Incidentally, it is preferable that the comb unit 253a of the engaging unit 253 be in the shape shown in Fig. 12 (a). Specifically, it is preferable that the respective combs which constitute the comb unit 253a be formed in a triangular shape having a bottom face parallel to the Z-axis in a side view as shown in the figure. In addition, it is preferable that the comb unit 251b of the engagingly locking unit 251 be formed so as to mesh with the thus formed comb unit 253a. In this manner, it is possible to restrain the reflector unit 30 from slipping off downward (the -Y-direction) owing to its own weight or vibration. This is also true as to the blind spot assist device 300 according to the third embodiment, which will be described later.

Hereinafter, a description will be given with respect to how the height of the reflector unit 30 is adjusted in the blind spot assist device 200 according to the second embodiment.

In a state in which the lock unit 250 is locked, owing to the biasing force in the -Z-direction of the elastic member 252, the comb unit 251b of the engagingly locking unit 251 meshes with the comb unit 253 of the engaging unit 253 that is immobilized with respect to the pillar 6R, and the reflector unit 30 is thereby positioned at a certain height.

If the user 2 lifts the reflector unit 30 (the casing 20) in the +Z-direction against the resilient force of the elastic member 252, the engagingly locking unit 251 moves in the +Z-direction, and the comb unit 251b of the engagingly locking unit 251 is spaced from the comb unit 253a of the engaging unit 253. In this manner, a lock state in which the engagingly locked situation by the engagingly locking unit 251 has been released is established.

The user 2 slides the reflector unit 30 along the Y-direction and then positions the reflector unit at a desired height while the reflector unit is thus operated to be lifted.

After the reflector unit 30 has been positioned at the desired height, if the user 2 stops the lifting operation of the reflector unit 30, owing to the resilient force of the elastic member 252, the engagingly locking unit 251 moves in the -Z-direction together with the reflector unit 30 and then reverts to a position before the lifting operation. In this manner, the lock unit 250 is established in the lock state in which the engagingly locking unit 251 and the engaging unit 253 engage with each other, and the reflector unit 30 is engagingly locked with the pillar 6R.

By the operation described hereinabove, the reflector unit 30 is adjusted at the desired height, and is fixed at that height. Thus, in the second embodiment, merely by the operation of lifting the reflector unit 30 also functioning as an operating unit (the pressing operation in the +Z-direction and sliding the reflector unit 30, the height of the reflector unit 30 can be adjusted and thus adjustment is easy like the first embodiment.

### (Third Embodiment)

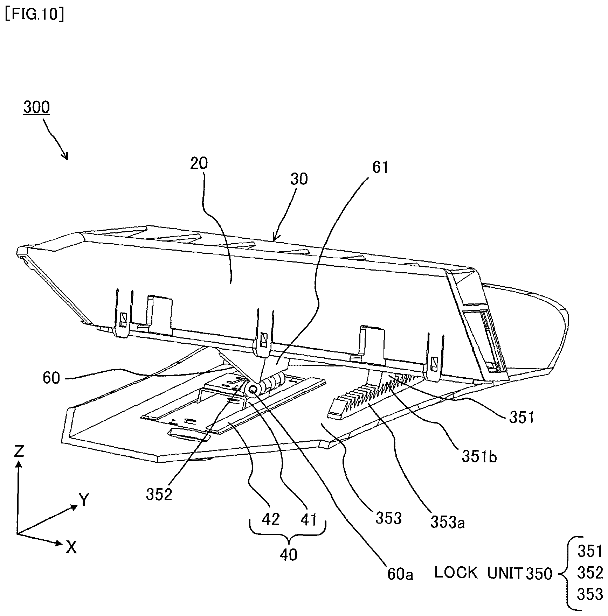

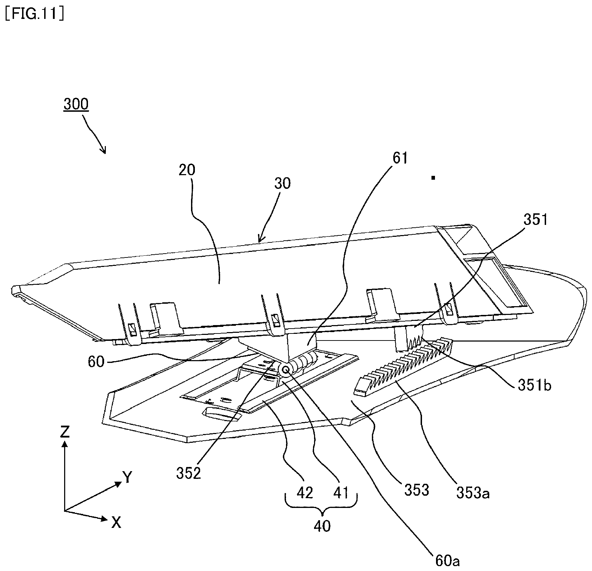

Fig. 10 and Fig. 11 each show a perspective view of essential parts of a blind spot assist device 300 according to a third embodiment. A lock unit 350 according to the third embodiment is mainly different from that of the second embodiment in that an elastic member 352 (mainly refer to Fig. 12 (b)) is provided at a hinge unit 60.

The lock unit 350 according to the third embodiment has: an engagingly locking unit 351 to engagingly lock a reflector unit 30 with a pillar 6R; an elastic member 352; and an engaging unit 353 to engage with the engagingly locking unit 351 to oppose to each other in the Z-axis direction.

Although a comb unit 351b included in the engagingly locking unit 351 is formed to extend in the Y-direction like the second embodiment, only one comb is provided unlike the second embodiment. Also, only one comb unit 353a included in the engaging unit 353 is provided similarly.

In addition, the blind spot assist device 300 according to the third embodiment is provided with a hinge unit 60 to couple a slide plate 41 and a casing 20 of a reflector unit 30 to each other.

This hinge unit 60 has a hinge shaft 60a which is substantially parallel to the Y-direction, and about this hinge shaft 60a, makes the reflector unit 30 rotatable in the clockwise direction in Fig. 10 and Fig. 12(b) with respect to the slide plate 41. It is to be noted that the hinge unit 60 and the casing 20 of the reflector unit 30 are coupled to each other via a fixing member 61. The fixing member 61 may be integral with, or alternatively, may be independent of, the casing 20.

In the third embodiment, like the second embodiment, the reflector unit 30 (the casing 20) per se functions as an operating unit operated to be pressed by the user 2. It is to be noted that the pressing operation of the reflector unit 30 in the third embodiment, in Fig. 10, is an operation of lifting a right side portion more significantly than the hinge shaft 60a of the reflector unit 30 (or an operation of pushing down the left side portion more significantly than the hinge shaft 60a).

A state in which the reflector unit 30 is not thus operated to be pressed is referred to as a lock state in which the engagingly locking unit 351 and the engaging unit 353 has been engaged with each other owing to a resilient force of the elastic member 352 which will be described later.

On the other hand, in a state in which the user 2 makes a pressing operation of the reflector unit 30 (a state of releasing operation in the third embodiment), the engagingly locking unit 351 moves in the direction opposing to the resilient force of the elastic member 352. In this manner, an unlock state in which the engagingly locked situation by the engagingly locking unit 351 has been released is established.

The elastic member 352 is made of a torsion spring, for example, and is provided at the hinge unit 60. The elastic member 352 is provided so as to have the resilient force in a direction in which the hinge unit 60 opens.

The thus provided elastic member 352 biases the engagingly locking unit 351 toward an approximate -Z-direction owing to the resilient force. Specifically, the elastic member 352 biases the reflector unit 30 in the clockwise direction in Fig. 10 and Fig. 12(b) about the hinge shaft 60a via the hinge unit 60. In this manner, the engagingly locking unit 351 that has been fixed to the reflector unit 30 also is biased in the clockwise direction about the hinge shaft 60a, and as a result, is biased in the approximate -Z-direction.

By means of the hinge unit 60 and elastic member 352 that are configured as described above, the comb unit 351b of the engagingly locking unit 351 is biased in the substantial -Z-direction so as to mesh with the comb unit 353a of the engaging unit 353.

Hereinafter, a description will be given with respect to how the height of the reflector unit 30 is adjusted in the blind spot assist device 300 according to the third embodiment.

In a state in which the lock unit 350 is locked, by means of the biasing force in the counterclockwise direction in Fig. 10 about the hinge shaft 60a of the elastic member 353, the comb unit 351b of the engagingly locking unit 351 meshes with the comb unit 353a of the engaging unit 353 that is immobilized with respect to the pillar 6R, and the reflector unit 30 is thereby positioned at a certain height.

If the user 2 makes a pressing operation of the reflector unit 30 (the casing 20) (as described previously, the user lifts the right side of the reflector unit 30 or pushes down the left side), the reflector unit 30 that has been fixed to the hinge unit 60 via the fixing member 61 moves in the counterclockwise direction about the hinge shaft 60a. Concurrently with this movement, the comb unit 351b of the engagingly locking unit 351 is spaced from the comb unit 353a of the engaging unit 353. In this manner, the blind spot assist device 300 according to the third embodiment, as shown in Fig. 11, is established in an unlock state in which the engagingly locked situation by the engagingly locking unit 351 has been released.

The user 2 causes the reflector unit 30 to slide in the Y-direction and then to be positioned at a desired height while this unlock state is kept as it is.

After the reflector unit 30 has been positioned at the desired height, if the user 2 stops the pressing operation of the reflector unit 30, owing to the resilient force of the elastic member 352, the engagingly locking unit 351 moves in the clockwise direction about the hinge shaft 60a, together with the reflector unit 30, and reverts to a position before the pressing operation. In this manner, the lock unit 350 is established in a lock state in which he engagingly locking unit 351 and the engaging unit 353 engage with each other, and the reflector unit 350 is engagingly locked with the pillar 6R.

By the operation described hereinabove, the reflector unit 30 is adjusted at a desired height, and is fixed at that height. Thus, in the third embodiment, merely by making a pressing operation of the reflector unit 30 that also functions as an operating unit and then sliding the reflector unit 30, the height of the reflector unit 30 can be adjusted and thus adjustment is easy like the first and second embodiments.

Incidentally, although the third embodiment described hereinabove showed an example in which the elastic member 352 was provided so as to have the resilient force in the open direction of the hinge unit 60, this elastic member can also be provided so as to have a resilient force in a closed direction of the hinge unit 60. Hereinafter, a modification example of the third embodiment in which the elastic member 352 was thus provided will be described with reference to Fig. 12 (c).

The hinge unit 60 according to this modification example is provided so as to open in a back rotation direction (the counterclockwise direction) to the hinge unit 60 that was shown in Fig. 12 (b). In addition, the elastic member 352, as shown in Fig. 12 (c), biases in the direction in which the hinge unit 60 is closed.

By the thus configured elastic member 352 according to the modification example as well, owing to the elastic force, the engagingly locking unit 351 can be biased in the clockwise direction. In this manner, the engagingly locking unit 351 that has been fixed to the reflector unit 30 is also biased in the counterclockwise about the hinge shaft 60a, and as a result, is biased in an approximate -Z-direction.

In this modification example as well, the user 2 lifts the right side in the Fig. 12 (c) more significantly than the hinge 60a or pushes down the left side, of the reflector unit 30, the state in which the engagingly locked situation by the engagingly locking unit 351 has been released is established. In addition, a method of height adjustment of the reflector unit 30 is similar to that in the foregoing description of the third embodiment.

In the blind spot assist devices 200, 300 according to the second and third embodiments described hereinabove (including the modification example of the third embodiment), the engagingly locking units 251, 352 (one example of the first member) and engaging units 253, 353 (one example of the second member) oppose to each other in the normal line direction of the face oriented into the vehicle 1 of the pillar 6R (the substantial Z-direction), and meshes with each other. In addition, in the blind spot assist devices 200, 300 according to the second and third embodiments, the casing 20 of the reflector unit 30 is employed as an operating unit. In this manner also, as described previously, it is possible to facilitate height adjustment of the reflector unit 30.

It is to be noted that the present invention is not limited by the foregoing embodiments, modification examples, and drawings. Various modifications (including deletion of constituent element(s)) can be appropriately made without deviating from the spirit of the present invention.

Although the foregoing description showed an example in which each of the blind spot assist devices 100, 200, 300 was provided at the right side pillar 6R when seen from the driver, of the front pillar, the device may be provided at the left side pillar 6L.

Also, the pillars of the vehicle 1 are referred to as pillar A (the front pillar), pillar B, pillar C, pillar D, ... in sequential order from the front side to the rear side of the vehicle 1, of course, a blind spot is produced by a pillar other than pillar A. Therefore, it is also possible to provide the blind spot assist device 100 at a pillar other than pillar A, such as pillar B or pillar C.

In the foregoing description, in order to ensure a clear understating of the present invention, an explanation of publicly known technical matters which are not important was appropriately omitted.

### INDUSTRIAL APPLICABILITY

The present invention can be applied to blind spot assist devices, and specifically, is applicable to a device to cause a driver to visually recognize an image of a blind spot region which is blocked by a pillar of a vehicle.

### DESCRIPTION OF REFERENCE NUMERALS

- 1: Vehicle
- 2: User
- 6R, 6L: Pillar
- 6a: Pillar main body
- 6b: Pillar cover (pillar garnish)
- 6c: Aperture
- D: Blind spot region
- M: Object
- 100, 200, 300: Blind spot assist device
- 10: A pair of mirrors
- 11: First mirror
- 12: Second mirror
- 20: Casing
- 25: Cover member
- 26: Bearing unit
- 30: Reflector unit
- 40: Slide unit
- 41: Slide plate
- 42: Guiderail
- 42a: Guide groove
- 50, 250, 350: Lock units
- 51, 251, 351: Engagingly locking unit
- 51a: Operating unit
- 51b, 251b, 351b: Comb unit
- 51c, 251c: Shaft unit
- 60: Hinge unit
- 60a: Hinge shaft
- 52, 252, 352: Elastic member
- 53, 253, 353: Engaging unit
- 53a, 253a, 353a: Comb unit

## Claims

1. A blind spot assist device to visually recognize an image of a region to be a blind spot blocked by a pillar of a vehicle, the device comprising:
a reflector unit having a first mirror to reflect a part of incident light and transmit a remaining part and a second mirror opposing to the first mirror and reflecting light from the first mirror toward the first mirror;
a slide unit to make the reflector unit slidable along a direction in which the pillar extends; and
a lock unit to immobilize the reflector unit with respect to the pillar in a lock state,
wherein the reflector unit causes the occupant to visually recognize the image in the vehicle by the light having transmitted the first mirror, of the light representative of the image incident between the first mirror and the second mirror, and
wherein the lock state of the lock unit is released, the reflector unit is slid along the direction, and the lock unit is thereafter established in the lock state, and a position in the direction of the reflector unit is thereby adjustable.

2. The blind spot assist device according to claim 1,
wherein the lock unit has:
a first member and a second member engaging with each other;
an elastic member to bias one of the first member and the second member to another one; and
an operating unit to space the first member and the second member from each other, if a release operation of releasing the lock state is made,
wherein, if the release operation is made to the operating unit, the first member and the second member are spaced from each other, and a state in which the reflector unit is engagingly locked with the pillar is released, making it possible to slide the reflector unit along the direction, and
wherein, if the releasing operation to the operating unit is stopped, the first member and the second member mesh with each other owing to a biasing force of the elastic member, and the lock state in which the reflector unit is engagingly locked with the pillar is established.

3. The blind spot assist device according to claim 2,
wherein the reflector unit has a casing to hold the first mirror and the second mirror,
the first member is provided in the casing, and if the operating unit is operated to be pressed, moves together with the operating unit,
the second member is immobilized with respect to the pillar,
the elastic member biases the first member toward the second member, and
the operating unit is pressed in a direction opposing to a biasing force of the elastic member, and the releasing operation for the first member to be spaced from the second member is thereby made.

4. The blind spot assist device according to claim 2 or 3, wherein the first member and the second member oppose to each other, and engage with each other in a normal line direction of a face oriented into the vehicle of the pillar.

5. The blind spot assist device according to any one of claims 2 to 4, wherein the reflector unit has a casing to hold the first mirror and the second mirror, and
the casing is employed as the operating unit.

6. The blind spot assist device according to any one of claims 1 to 5,
wherein the pillar has a pillar main body and a pillar cover to cover the pillar main body,
in the pillar cover, an aperture is provided over a range in which the reflector unit is slidable,
the blind spot assist device is immobilized with respect to the reflector unit, and further comprises a cover member to slide with sliding of the reflector unit, and
the cover member closes the aperture and overlaps a part of the pillar cover, and even if the reflector unit is slid, disallows the pillar main body to be exposed from the aperture.
